# EUROPEAN PATENT APPLICATION

(11) **EP 4 607 715 A1**
(43) Date of publication of application: **27.08.2025**
(21) Application number: 25159044.4
(22) Date of filing: 20.02.2025
(51) Int. Cl.: H01R 13/506, H01R 13/52, H01R 24/54, H01R 103/00

(54) **TWO-PART FORM SEALED CONNECTOR**

(30) Priority: 20.02.2024 CN 202410190448
(71) Applicant: Aptiv Connection Systems (Nantong) Ltd., Nantong, Jiangsu 226300 (CN); Aptiv Electrical Centers (Shanghai) Co., Ltd., Shanghai 201814 (CN)
(72) Inventor: TIAN, Xiaoxian, Shanghai (CN); JING, Yingquan, Shanghai (CN)
(74) Representative: Bardehle Pagenberg Partnerschaft mbB Patentanwälte Rechtsanwälte

(57) **Abstract**

This application discloses a two-part form sealed connector, the sealed connector comprising: a first housing having a first containing cavity; a second housing assembly comprising a second housing body and an integral seal, the integral seal includes a first seal part and a second seal part, the first seal part is to provide sealing between the first housing and the second housing body, and the second housing body has a second containing cavity in communication with the first containing cavity, and the second seal part is arranged in the second containing cavity; and a terminal assembly to be arranged in the first containing cavity, and at least part of the terminal assembly is arranged in the second containing cavity, and the second seal part is to seal the terminal assembly and the second housing body.

## Description

### Technical field

This application relates to the technical field of electric connector, and in particular, relates to a two-part form sealed connector.

### Technical Background

In the prior art, a small or miniaturized sealed electric connector usually relies on multiple seals to achieve sealing between multiple connected parts, so that the connector can obtain waterproof performance. However, due to the large number of seals and parts for retaining the seals (seal retainers), the assembly process of the connector is relatively cumbersome and the assembly efficiency is low. Also, there is room for improvement in the waterproof effect of the sealed connector.

### Summary

This application is to provide a sealed electric connector for solving the above problems.

According to one aspect of this application, a sealed connector is provided, the sealed connector comprising: a first housing having a first containing cavity; a second housing assembly comprising a second housing body and an integral seal, the integral seal includes a first seal part and a second seal part, the first seal part is to provide sealing between the first housing and the second housing body, and the second housing body has a second containing cavity in communication with the first containing cavity, and the second seal part is arranged in the second containing cavity; and a terminal assembly to be arranged in the first containing cavity, and at least part of the terminal assembly is arranged in the second containing cavity, and the second seal part is to seal the terminal assembly and the second housing body.

In the above technical solution of sealed connector, optionally, the integral seal further comprises a seal connection part, the second housing body has a communication port in communication with the second containing cavity, the seal connection part is to penetrate through the communication port, and is connected with the first seal part and the second seal part respectively.

In the above technical solution of sealed connector, optionally, the connector is a right angle connector.

In the above technical solution of sealed connector, optionally, the first housing has an assembly port in communication with the first containing cavity, and the second housing assembly is embedded in the assembly port.

In the above technical solution of sealed connector, optionally, the first containing cavity comprises a first sub cavity and a second sub cavity which are in communication with each other, and the second housing assembly is arranged in the second sub cavity; the terminal assembly comprises an contacting part and a wiring part which are connected to each other, the contacting part is arranged in the first sub cavity, the wiring part is arranged in the second sub cavity, and at least part of the wiring part is arranged in the second holding cavity, and the wiring part is used for connecting a cable.

In the above technical solution of sealed connector, optionally, the contacting part and the wiring part extend in different directions.

In the above technical solution of sealed connector, optionally, the terminal assembly is provided with a sealing groove along the circumferential direction, and the second seal part is to be embedded in the sealing groove.

In the above technical solution of sealed connector, optionally, one of the first housing and the second housing assembly is provided with a latching slot, and the other one comprises a latch, the latch is to latch with the latching slot to connect the first housing and the second housing assembly.

In the above technical solution of sealed connector, optionally, the first seal part comprises a first base portion and a first lip portion, the first base portion is connected to the second housing body, the first lip portion is arranged around the first base portion along the circumference of the first base portion, and the first lip portion is to connect with the first housing.

In the above technical solution of sealed connector, optionally, the second seal part comprises a second base portion and a second lip portion, the second base portion is connected to the second housing body, the second lip portion is connected to the second base portion and the terminal assembly, and the second first lip portion is looped on the terminal assembly.

In the above technical solution of sealed connector, optionally, the second housing body is provided with a first limiting groove, a part of the wiring part of the terminal assembly is embedded in the first limiting groove, and the first limiting groove is used to limit the position of the connecting part along the extension direction of the contacting part.

In the above technical solution of sealed connector, optionally, the first housing has a limiting surface, the limiting surface is used to enclose the second sub cavity, the wiring part is connected with the limiting surface, and the limiting surface is used to limit the position of the wiring part along the extension direction of the contacting part.

In the above technical solution of sealed connector, optionally, the first housing has a second limiting groove, the second limiting groove is arranged on the limiting surface, and a part of the wiring part is embedded in the second limiting groove, which is used to limit the position of the wiring part along the extension direction of the wiring part.

The technical benefits of this application comprise: an integral seal comprising a first seal part and a second seal part is preassembled onto the second housing assembly, so as to reduce the number of seals, and reduce the total number of parts for making the connector. Also, by providing an integral seal, there is no need to adjust the positions of separate seals during assembly operation.

### Accompanied Drawing

In order to provide a clearer explanation of the technical solution in the embodiments of the present application, a brief introduction will be given to the drawings to be used for depicting the embodiments. It is noted that the drawings described below are only some embodiments of the present application.
Figure 1 is an exploded view of the electric connector according to an embodiment of the application.
Fig. 2 is a sectional view of the electric connector according to the embodiment of the application.
Fig. 3 is a sectional view of the first housing in the electric connector according to the embodiment of the application.
Fig. 4 is the structural diagram of the first housing in the electric connector according to the embodiment of the application.
Fig. 5 is a sectional view of a second housing assembly in the electric connector according to the embodiment of the application.
Fig. 6 is the structural diagram of the second housing assembly in the electric connector according to the embodiment of the application.
Figure 7 is the structural diagram of another angle of the second housing assembly in the electric connector according to the embodiment of the application.
Fig. 8 is a sectional view of an integral seal including a first seal and a second seal in the electric connector according to the embodiment of the application.
Fig. 9 is the structural diagram of the integrated seal including the first seal part and the second seal part in the electric connector according to the embodiment of the application.
Fig. 10 is a sectional view of the second housing body in the electric connector according to the embodiment of the application.
Fig. 11 is the structural diagram of the second housing body in the electric connector according to the embodiment of the application.
Fig. 12 is a sectional view of the terminal assembly in the electric connector according to the embodiment of the application.
Figure 13 is the structural diagram of the terminal assembly in the electric connector according to the embodiment of the application.

### Reference signs:

1-first housing, 11-first containing cavity, 111-first sub-cavity, 112-second sub-cavity, 12 assembly port, 13 limiting surface, 14-second limiting slot, 2-second housing assembly, 200 integrated seal, 21-second housing body, 211 communication port, 212-first limiting slot, 213-second containing cavity, 22-first seal part, 221-base portion, 222-first lip edge, 23-second seal part, 231-second body part, 232-second lip edge, 24-seal connection part, 3-terminal assembly, 31-contacting part, 32-wiring part, 33 seal groove, 34 limiting protrusion, 35 conductor, 4-latching slot, 5-latch, 6- anti-rotation component 6, 7-front seal, 8-secondary locking component.

### Detailed Embodiments

The technical solution in the embodiment of the application will be clearly and completely described below in combination with the drawings in the embodiment of the application. It is appreciated the described embodiments are only part of the embodiments of the application, not all of them. Based on the embodiments in the application, all other embodiments obtained by those skilled in the art without creative work fall within the scope of protection of the application.

In the description of this application, it should be noted that, unless otherwise specified and limited, the terms "connected" and "coupled" should be understood in a broad sense, for example, it can be fixed connection, removable connection, or integrated connection. It can be mechanical connection, electrical connection or mutual communication. It can be connected directly or indirectly through an intermediate medium. It can be the connection within two components or the interaction between two components. For those skilled in the art, the specific meaning of the above terms in the application can be understood according to the specific circumstances. In the description of this application, "multiple" means two or more, unless otherwise specifically defined. In addition, the terms "first" and "second" are only used for descriptive purposes and cannot be understood as indicating or implying relative importance or implicitly indicating the number of indicated technical features. Thus, the features defined as "first" and "second" may explicitly or implicitly include one or more features.

The following disclosure provides many different embodiments or examples to implement different structures of the present application. In order to simplify the disclosure of the present application, the components and settings of specific examples are described below. Of course, they are merely examples and are not intended to limit the present application.

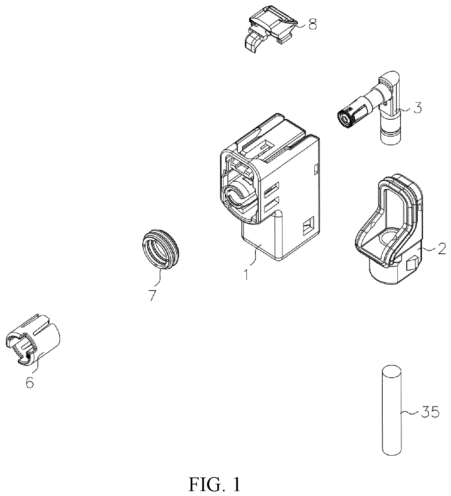

In order to solve the technical problems of cumbersome connector assembly process and low assembly efficiency, an embodiment of the application provides an electric connector (also referred to as "connector"). Please refer to Fig.1, which is an exploded schematic diagram of the connector provided by the embodiment of the application. The connector includes a first housing 1, a second housing assembly 2, and a terminal assembly 3. The first housing 1 comprises a first containing cavity 11, and the terminal assembly 3 is to be arranged in the first containing cavity 11. The second housing assembly 2 comprises a second housing body 21. The second housing body 21 has a second containing cavity 213 in communication with the first containing cavity 11. The terminal assembly 3 is to be arranged in the first containing cavity 11, and at least part of the terminal assembly 3 is to be arranged in the second containing cavity 213. The second seal part 23 is to provide sealing connection between the connection terminal assembly 3 and the second housing body 21.

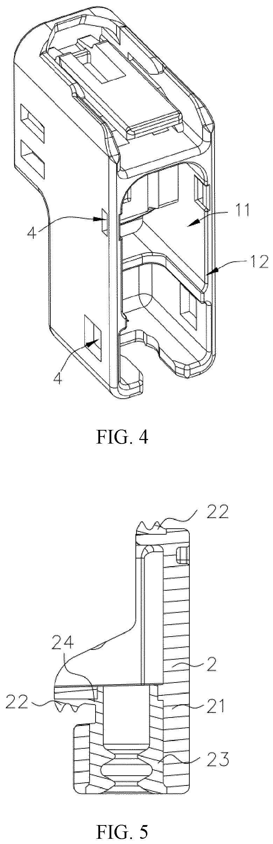

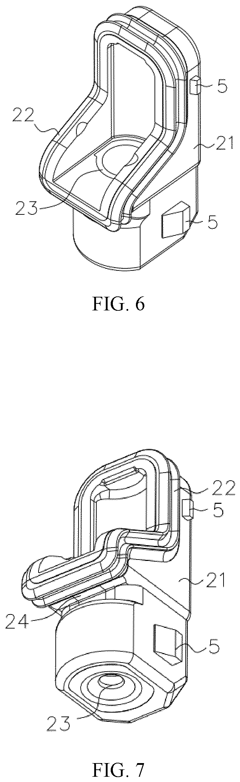

In some embodiments, the configuration of the second housing assembly 2 is shown in Figs 5, 6 and 7. The second housing assembly 2 is a preassembled component, and an integral seal 200 is preassembled on the second housing body 21 of the second housing assembly 2 in advance. The integral seal 200 comprises a first seal part 22 for sealing and connecting the second housing body 21 and the first housing 1, and a second seal part 23 for sealing and connecting the second housing body 21 and the terminal assembly 3. This configuration eliminates the requirement of seal retainers of two seals, reducing the number of connector parts, facilitating the transportation of connector parts, and simplifying the connector assembly process at customer end. In addition, during the assembly process, there is no need for the assembly personnel to manually adjust the position of a seal between the first housing 1 and the second housing assembly 2, and the position of a seal between the second housing assembly 2 and the terminal assembly 3, thus assembly error is avoided. The finished connector after assembly has better sealing and water resistance performance.

The integral seal 200 of the second housing assembly 2 further comprises a seal connection part 24. The second housing body 21 has a communication port 211 which is in communication with the second containing cavity 213. The seal connection part 24 is to pass through the communication port 211, and is connected with the first seal part 22 and the second seal part 23 respectively.

In the above embodiment, the seal connection part 24 connecting the first seal part 22 and the second seal part 23 enables the first seal part 22 and the second seal part 23 to mutually limit each other's position, avoiding the displacement of the first seal part 22 and the second seal part 23 when assembling the second housing assembly 2 and the first housing 1, ensuring that the first seal part 22 and the second seal part 23 do not displace after assembling the connector, resulting in better sealing effect. In addition, the seal connection part 24 which can limit the position of the first seal part 22 and the second seal part 23 can eliminate the requirement of seal retainer, further reducing the number of connector parts, facilitating the transportation of connector parts, and simplifying the assembly procedure of the connector by customers.

In some embodiments, the second housing body 21 further has a seal limiting surface, and the first seal part 22 is to be interfaced with the seal limiting surface. When the first housing 1 is to be connected with the second housing assembly 2 and the second housing body is moving towards the inside of the first containing cavity 11, the seal limiting surface can prevent the first seal part 22 from moving towards to the second housing body 21 under the action of friction. In addition, the interaction between the seal limiting surface and the seal connection part 24 can further reduce the relative movement between the first seal part 22 and the second seal part 23, so that the positions of the first seal part 22 and the second seal part 23 relative to the second housing body 21 are more stable and not prone to offset. Specifically, the second housing body 21 is provided with a step, which is to define the seal limiting surface, and the first seal part 22 is to be embedded in the step.

It can be understood that since the seal connection part 24 is an elastic part, the seal connection part 24 can prevent the first seal part 22 and the second seal part 23 from moving away from each other. The seal limiting surface can prevent the first seal part 22 from moving in a direction towards the second seal part 23. Therefore, the presence of both the sealing connection part 24 and the seal limiting surface can better secure the positions of the first seal part 22 and the second seal part 23, avoiding the offset of the first seal part 22 and the second seal part 23 during the assembling process, and making the finished connector have reliable water-proof sealing performance.

In the above embodiment, by providing the integral seal 200 consisting of the first seal part 22, the second seal part 23 and the seal connection part 24, the position limiting effect between the first seal part 22, the second seal part 23 and the seal connection part 24 can be better, the connection between the first seal part 22, the second seal part 23 and the second housing body 21, the first housing 1 is more tight, and the sealing and waterproof effect of the connector is better.

In addition, the integral structure can make the connection performance of the first seal part 22, the second seal part 23 and the seal connection part 24 better, as the seal connection part 24 is not prone to break with the first seal part 22 and the second seal part 23 under the condition of continuous force, so that the first seal part 22 and the second seal part 23 can still limit each other's position under the condition of continuous force, so that the connector can obtain the lasting sealing and waterproof performance, and the service life of the connector is longer and the reliability is better.

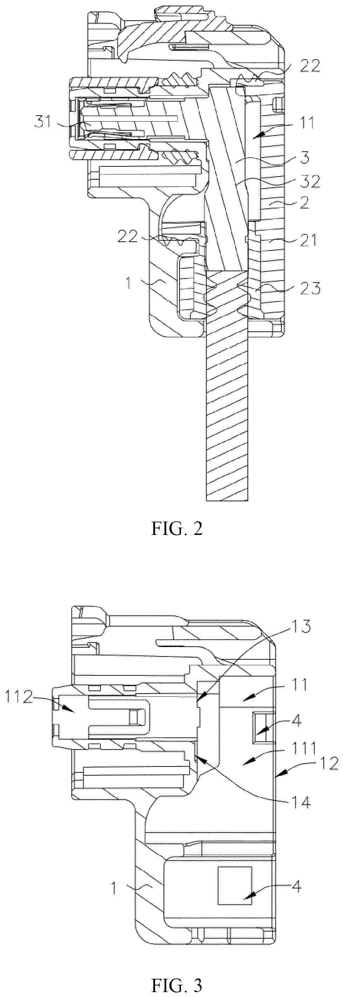

Some aspects of the embodiments are illustrated in figures 2-4. The first housing 1 has an assembly port 12 in connection with the first containing cavity 11, and the second housing assembly 2 is to be embedded in the assembly port 12. Specifically, in the assembly process of the connector of the embodiment of the application, the assembling of the connector can be completed by simply embedding the second housing assembly 2 into the first housing 1. At the same time, the sealing between the first housing 1 and the second housing assembly 2 is also completed. The assembly process is simple, the assembly efficiency is higher, and it is more suitable for mass assembly. The assembled connector has better sealing and waterproof performance and higher reliability.

In some embodiments, a terminal assembly 13 as shown in Figs. 2, 12 and 13 is provided. Taking reference to Fig.3, the first containing cavity 11 of the first housing 1 comprises a first sub cavity 111 and a second sub cavity 112 which are in communication with each other, and the second housing assembly 2 is to be arranged in the second sub cavity 112. The terminal assembly 3 includes a contacting part 31 and a wiring part 32 which are connected together. The contacting part 31 is to be arranged in the first sub cavity 111 of the first housing 1, the wiring part 32 is arranged in the second sub cavity 112 of the first housing 1, and at least part of the connection part 32 is to be arranged in the second containing cavity 213 of the second housing assembly 2. The wiring part 32 is used to connect the harness. The contacting part 31 and the wiring part 32 of the terminal assembly 3 may be of an integral structure.

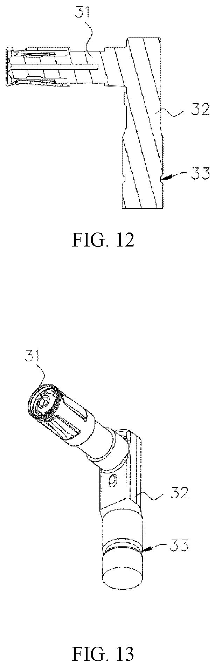

The contacting part 31 of the terminal assembly 3 can be either a male end or a female end (a female end is shown in Figure 12-13), and the corresponding terminal assembly 3 can be either a male terminal assembly 3 or a female terminal assembly 3, and the corresponding connector in this application can be either a male or a female connector.

In some embodiments, the first housing 1 comprises a sidewall to enclose the first sub cavity 111. The connector also comprises an anti-rotation device 6, which is to avoid rotation around the extension direction of the contacting part 31 between the two connectors after the illustrated connector is connected with another connector. In particular, the end of the anti-rotation component 6 is provided with an anti-rotation groove or anti-rotation protrusion, and the other connector mated with the connector is provided with an anti-rotation protrusion or anti-rotation groove corresponding to the anti-rotation groove or anti-rotation protrusion on the anti-rotation component 6 to realize the anti-rotation function.

In some embodiments, the connector further comprises a front seal 7, which can be a sealing ring and is provided on the sidewall. The front seal 7 is used to provide inter-connector sealing when the illustrated connector is connected with another connector.

In some embodiments, the connector further comprises a secondary locking component 8, which is to be connected to the first housing 1. The econdary locking component 8 is used to provide enhanced retention force when the illustrated connector is connected to another connector, so as to prevent the two connectors from moving opposite to each other along the extension direction of the contacting part 31.

Taking reference to Figs. 2, 12, and 13, the contacting part 31 and wiring part 32 of the terminal assembly 3 extend in different directions. In some embodiments, the angle between the extension direction of the contacting part 31 and the extension direction of the wiring part 32 of the terminal assembly 3 is 90 °. In other embodiments, the contacting part 31 and the wiring part 32 extend in the same direction.

In some embodiments, taking reference to Figs. 2, 12, 13, the terminal assembly 3 is provided with a sealing groove 33 along the circumferential direction, and the second seal part 23 is embedded in the sealing groove 33. In the above embodiment, when the terminal assembly 3 penetrates through the second seal part 23, due to the elastic deformation of the second seal part 23, a part of the second seal part 23 will be squeezed into the sealing groove 33, so that the sealing effect of the second seal part 23 is better. In addition, the part of the second seal part 23 squeezed into the sealing groove 33 can also limit the position of the terminal assembly 3, which can prevent the terminal assembly 3 from moving along the extension direction of the wiring part 32, and improve the connection stability of the connector.

In some embodiments, one of the first housing 1 and the second housing assembly 2 is provided with a latching slot 4, and the other one has a latch 5. The latch 5 is clamped in the latching slot 4 to connect the first housing 1 and the second housing assembly 2. Refer to Figs. 4, 6 and 7, in some embodiments, all latches 5 are provided in the second housing body 21 of the second housing assembly 2, and all latching slots 4 are provided in the first housing 1. In other embodiments, all the latching slots are provided in the second housing body 21, and all the latches 5 are provided in the first housing 1. In the above embodiment, the first housing 1 and the second housing assembly 2 are assembled together through the latches 5 and latching slots 4.

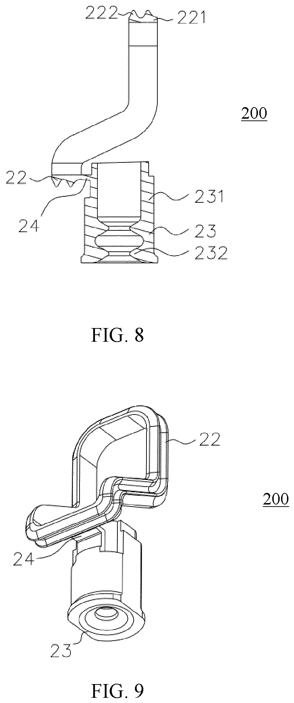

In some embodiments, taking reference to Fig. 8, the first seal part 22 comprises a first base portion 221 and a first lip portion 222. The first base portion 221 is to be connected with the second housing body 21, and the first lip portion 222 is arranged around the first base portion 221 along the circumference of the first base portion 221, and the first lip portion 222 is to be connected with the first housing 1.

In the above embodiment, the first base portion 221 provided on the inner side is easier to be embedded in the first containing cavity 11 than the first lip portion 222 provided on the outer side. When the first base portion 221 enters the first containing cavity 11, the first lip portion 222 can also enter the first containing cavity 11 after elastic deformation. The first lip portion 222 entering the first housing cavity 11 has a larger size than the base portion 221, and the first lip portion 222 has more elastic deformation than the first base portion 221. It can be understood that the first lip portions 222 can be a plurality, and the plurality of first lip portions 222 are spaced along the extension direction of the base 221 at intervals.

In some embodiments, taking reference to Fig.8, the second seal part 23 comprises a second base portion 231 and a second lip portion 232. The second base portion 231 is to be connected to the second housing body 21, the second lip portion 232 is to be connected to the second body part 231 and the terminal assembly 3, and the second lip portion 232 is provided around the terminal assembly 3.

In the above embodiment, the hole surrounded by the second base portion 231 on the outside is larger, and the hole surrounded by the second lip portion 232 on the inside is smaller. Compared with the second base portion 231, it is more difficult for the terminal assembly 3 to pass through the hole surrounded by the second lip portion 232. When the terminal assembly 3 extends into the hole surrounded by the second base portion 231, the second lip portion 232 produces elastic deformation, and the terminal assembly 3 can also extend into the hole surrounded by the second lip portion 232. The second lip portion 232 can produce greater elastic deformation than the second base portion 231, resulting in better sealing effect, so that the connector has better sealing connectivity between the second housing assembly 2 and the terminal assembly 3.

In some embodiments, the second lip portion 232 is to seal the wiring part 32. In other embodiments, the second lip portion 232 is to seal the cable 35 connected to the terminal assembly 3. In other embodiments, the second lip portion 232 is to seal both the wiring portion 32 and the cable 35 connected to the terminal assembly 3.

It can be understood that the second lip portions 232 can be a plurality, and the plurality of second lip portions 232 are spaced along the extension direction of the second base portions 231.

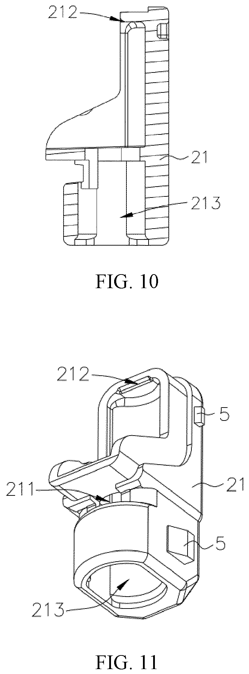

In some embodiments, referring to Figs. 2, 10 and 11, the second housing body 21 has a first limiting slot 212, and a part of the wiring part 32 is embedded in the first limiting slot 212, and the first limiting slot 212 is used to limit the position of the wiring part 32 along the extension direction of the contacting part 31.

In the above embodiment, the wiring part 32 is to press against the second housing body 21 at the first limiting slot 212, and the first limiting slot 212 can limit the position of the wiring part 32 in the extension direction of the contacting part 31 and the extension direction of the wiring part 32, so as to avoid vibration of the terminal assembly 3 when the illustrated connector is mated with another connector, resulting in unstable signal transmission. Specifically, the first limiting slot 212 is provided at an inner edge of the second housing body 21. The first limiting slot 212 has a contact surface toward the first sub cavity 111 and a contact surface toward the second containing cavity 213. The contact surface toward the first sub cavity 111 is in contact with a part of the side of the wiring part 32 away from the first sub cavity 111. The contact surface toward the first sub cavity 111 can prevent the wiring part 32 from moving away from the first sub cavity 111, so as to prevent the terminal assembly 3 from moving away from the first sub cavity 111 when it is connected with a terminal assembly 3 of another connector under stress. The contact surface towards the second containing cavity 213 is in contact with the end face of the wiring part 32 away from the second containing cavity 213. The contact surface towards the second containing cavity 213 can prevent the wiring part 32 from moving away from the second containing cavity 213, so as to prevent the terminal assembly 3 from moving away from the second containing cavity 213 when it is connected with a terminal assembly of another connector under stress.

Alternatively, the first limiting slot 212 may only one contact surface, which is obliquely arranged near the end face and side face of the wiring part 32. The contact surface is butted with the edge at the intersection of the end face and side face, and the contact surface may also apply a force towards the first sub cavity 111 and the second containing cavity 213 to the wiring part 32, so as to prevent the terminal assembly 3 from moving away from the first sub cavity 111 or the second containing cavity 213 when it is connected with a terminal assembly of another connector.

In some embodiments, taking to Figs. 2-4, the first housing 1 has a limiting surface 13, the limiting surface 13 is to enclose the second sub cavity 112, the wiring part 32 is to be connected with the limiting surface 13, and the limiting surface 13 is to limit the wiring part 32 along the extension direction of the contacting part 31. The first sub cavity 111 forms an opening on the limiting surface 13, from which the contacting part 31 extends into the first sub cavity 111 from the second sub cavity 112.

In the above embodiment, the limiting surface 13 presses against the wiring part 32, and the limiting surface 13 can limit the terminal in the extension direction of the contacting part 31. Specifically, the terminal assembly 3 is clamped between the first limiting slot 212 and the limiting surface 13 to prevent the terminal assembly 3 from moving along the extension direction of the contacting part 31, so as to avoid shaking of the terminal assembly 3 when the connector is inserted with another connector, resulting in unstable signal transmission.

In some embodiments, taking reference to figure 3, the first housing 1 has a second limiting slot 14, which is arranged on the limiting surface 13, and the part of the wiring part 32 is embedded in the second limiting slot 14 for limiting the wiring part 32 along the extension direction of the wiring part 32.

In the embodiments shown in Figures 1 to 13, the connector is described as a right angle connector (that is, the insertion direction is perpendicular to the cable entrance direction). It should be understood that the scope of this application is not limited to this.

Accordingly, other embodiments of the application comprise a vehicle harness having the connector described above. Because the connector in the above embodiment has good sealing and waterproof performance, the vehicle harness with the connector has higher reliability under water conditions.

The above describes a connector and a vehicle harness provided by the embodiment of the application. The application has provided some specific examples to elaborate the principle and implementation mode of the application. The description of the above embodiment is only used to help understand the technical scheme and its core idea of the application. Those of ordinary skill in the art should understand that they can still modify the technical solutions recorded in the above embodiments, or make equivalent replacement for some of the technical features. These modifications or substitutions do not make the essence of the corresponding technical solutions separate from the scope of the technical solutions of the embodiments of the application.

## Claims

1. A sealed connector, comprising:
a first housing (1) having a first containing cavity (11);
a second housing assembly (2) comprising a second housing body (21) and an integral seal (200), the integral seal includes a first seal part (22) and a second seal part (23), the first seal part (22) is to provide sealing between the first housing (1) and the second housing body (21), and the second housing body (21) has a second containing cavity (213) in communication with the first containing cavity (11), and the second seal part (23) is arranged in the second containing cavity (213); and
a terminal assembly (3) to be arranged in the first containing cavity (11), and at least part of the terminal assembly (3) is arranged in the second containing cavity (213), and the second seal part (23) is to seal the terminal assembly (3) and the second housing body (21).

2. The connector according to claim 1, wherein the integral seal (200) further comprises a seal connection part (24), the second housing body (21) has a communication port (211) in communication with the second containing cavity (213), the seal connection part (24) is to penetrate through the communication port (211), and is connected with the first seal part (22) and the second seal part (23) respectively.

3. The connector according to claim 1 or 2, wherein the connector is a right angle connector.

4. The connector according to any one of the preceding claims, wherein the first housing (1) has an assembly port (12) in communication with the first containing cavity (11), and the second housing assembly (2) is embedded in the assembly port (12).

5. The connector according to any one of the preceding claims, wherein the first containing cavity (11) comprises a first sub cavity (111) and a second sub cavity (112) which are in communication with each other, and the second housing assembly (2) is arranged in the second sub cavity (112);
the terminal assembly (3) comprises an contacting part (31) and a wiring part (32) which are connected to each other, the contacting part (31) is arranged in the first sub cavity (111), the wiring part (32) is arranged in the second sub cavity (112), and at least part of the wiring part (32) is arranged in the second holding cavity (213), and the wiring part (32) is used for connecting a cable.

6. The connector according to claim 5, wherein the contacting part (31) and the wiring part (32) extend in different directions.

7. The connector according to any one of the preceding claims, wherein the terminal assembly (3) is provided with a sealing groove (33) along the circumferential direction, and the second seal part (23) is to be embedded in the sealing groove (33).

8. the connector according to any one of the preceding claims, wherein one of the first housing (1) and the second housing assembly (2) is provided with a latching slot (4), and the other one comprises a latch (5), the latch (5) is to latch with the latching slot (4) to connect the first housing (1) and the second housing assembly (2).

9. The connector according to any one of the preceding claims, wherein the first seal part (22) comprises a first base portion (221) and a first lip portion (222), the first base portion (221) is connected to the second housing body (21), the first lip portion (222) is arranged around the first base portion (221) along the circumference of the first base portion (221), and the first lip portion (222) is to connect with the first housing (1).

10. The connector according to any one of the preceding claims, wherein the second seal part (23) comprises a second base portion (231) and a second lip portion (232), the second base portion (231) is connected to the second housing body (21), the second lip portion (232) is connected to the second base portion (231) and the terminal assembly (3), and the second first lip portion (232) is looped on the terminal assembly (3).

11. The connector according to claim 5 or any one of the preceding claims when combined with claim 5, wherein the second housing body (21) is provided with a first limiting groove (212), a part of the wiring part (32) of the terminal assembly (3) is embedded in the first limiting groove (212), and the first limiting groove (212) is used to limit the position of the connecting part (32) along the extension direction of the contacting part (31).

12. The connector according to claim 5 or any one of the preceding claims when combined with claim 5, wherein the first housing (1) has a limiting surface (13), the limiting surface (13) is used to enclose the second sub cavity (112), the wiring part (32) is connected with the limiting surface (13), and the limiting surface (13) is used to limit the position of the wiring part (32) along the extension direction of the contacting part (31).

13. The connector according to claim 12, wherein the first housing (1) has a second limiting groove (14), the second limiting groove (14) is arranged on the limiting surface (13), and a part of the wiring part (32) is embedded in the second limiting groove (14), which is used to limit the position of the wiring part (32) along the extension direction of the wiring part (32).

14. A vehicle harness, **characterized in that** it comprises a connector according to any one of claims 1-13.
